# EUROPÄISCHE PATENTANMELDUNG

(11) **EP 3 176 039 A1**
(43) Veröffentlichungstag der Anmeldung: **07.06.2017**
(21) Anmeldenummer: 16466014.4
(22) Anmeldetag: 01.12.2016
(51) Int. Cl.: B60R 5/04, B62D 25/08, B60R 7/02

(54) **VERBINDUNG VON MULDENEINSÄTZEN IM FAHRZEUGGEPÄCKRAUM**

(30) Priorität: 04.12.2015 CZ 20150864
(71) Anmelder: Skoda Auto a.s., 29301 Mladá Boleslav (CZ)
(72) Erfinder: Berak, Zdenek, CZ-517 02 Kvasiny (CZ)

(57) **Zusammenfassung**

Die Verbindung der Muldeneinsätze im Fahrzeuggepäckraum wird zwischen dem ersten Muldeneinsatz (1) und dem zweiten Muldeneinsatz (2) gebildet. Die Darstellung der Erfindung liegt darin, dass der erste Muldeneinsatz (1) eine Verbindungsnut (3) umfasst, die eine Prismenform aufweist. Der zweite Muldeneinsatz (2) umfasst einen prismatischen Vorsprung (4), der mit seiner Form dem Profil der Verbindungsnut (3) entspricht. Der prismatische Vorsprung (4) ist so ausgestaltet, dass er genau in die Verbindungsnut (3) des ersten Muldeneinsatzes (1) eingreift und durch die Form der Verbindungsnut (3) in dieser Nut (3) des ersten Muldeneinsatzes (1) gehalten wird.

## Beschreibung

### Technisches Gebiet

Die Erfindung betrifft die Verbindung von abstützenden Muldeneinsätzen im Fahrzeuggepäckraum, die unter der Bodenplatte des Fahrzeuggepäckraumes angeordnet sind.

### Bisheriger Stand der Technik

Derzeit werden im Fahrzeuggepäckraum abstützende Müldeneinsätzte verwendet, die unter der Bodenplatte angeordnet sind. Diese abstützenden Muldeneinsätze sind aus leichtem Schaummaterial wie dem expandierten Polypropylen (EPP) oder ausgehärteten Polystyrol usw. hergestellt. Derzeit sind Lösungen der Verbindung dieser Muldeneinsätze mittels eines Verbindungs- und Ankerelementes bekannt. Diese Verbindung der Muldeneinsätze ist so ausgeführt, dass das eigentliche Verbindungs- und Ankerelement eine verschmelzte Kunststoffeinlage in einem der zu verbindenden Teile darstellt. Als Gegenstück dient eine durch das Anschlussteil durchgehende Schraube, mit der diese Schraubverbindung hergestellt wird. Nachteilig ist, dass die Herstellung dieser Verbindung erhöhte Ansprüche auf die technologische Ausstattung des Arbeitsplatzes, auf die technologische Disziplin und auf die Einhaltung der vorgeschriebenen Parameter wie Drehzahl, Vorschub, Rechtwinkligkeit, usw. stellt.

Die resultierende Verbindung, welche den gestellten Anforderungen auf Festigkeit, Ortsbeständigkeit usw. entspricht, ist also bedingt durch die Einhaltung einer ganzen Reihe von Parameter unter Anwendung von Spezialwerkzeugen und -vorrichtungen. Die Technologie der Herstellung der Verbindung zeichnet sich durch eine hohe Ausschussrate bereits bei der Fertigung der Bauteile sowie durch erhöhtes Risiko der Beschädigung der Bauteile bei ihrer Benutzung im Betrieb, was Kundenbeschwerden hervorrufen kann.

### Darstellung der Erfindung

Die Aufgabe wird durch eine erfindungsgemäße Verbindung der Muldeneinsätze im Fahrzeuggepäckraum gelöst, die zwischen dem ersten Muldeneinsatz und dem zweiten Muldeneinsatz gebildet wird. Es handelt sich um einfaches Prinzip ohne Notwendigkeit von Spezialwerkzeugen und -vorrichtungen. Gleichzeitig entfällt das Risiko der Beschädigung der Bauteile durch das Herausreisen der verschmelzten Kunststoffeinlage aus dem Muldeneinsatz.

Die Darstellung der Erfindung liegt darin, dass der erste Muldeneinsatz eine Verbindungsnut umfasst, die eine Prisrnenform aufweist. Der zweite Muldeneinsatz umfasst einen prismatischen Vorsprung, der mit seiner Form dem Profil der Verbindungsnut entspricht. Der prismatische Vorsprung ist so ausgestaltet, dass er genau in die Verbindungsnut des ersten Muldeneinsatzes eingreift und durch die Form der Verbindungsnut in dieser Nut des ersten Muldeneinsatzes gehalten wird.

Der prismatische Vorsprung ist an dem zweiten Muldeneinsatz einteilig als Bestandteil des Muldeneinsatzes ausgebildet.

Der erste Muldeneinsatz und der zweite Muldeneinsatz sind aus dem expandierten Polypropylen hergestellt.

Diese Lösung der Verbindung kann auch seitenverkehrt verwendet werden, d.h. die Verbindungsnut wird in dem zweiten Muldeneinsatz ausgeführt und der erste Muldeneinsatz wird den prismatischen Vorsprung umfassen.

Die Darstellung der Erfindung liegt also in der gebildeten Verbindung, wo die verschmelzte Einlage durch eine in einem der Muldeneinsätze ausgebildete keilförmige Verbindungsnut ersetzt wird, in die ein in dem zweiten Muldeneinsatz ausgebildeter prismatischer Vorsprung eingreift.

### Übersicht der Figuren der Zeichnungen

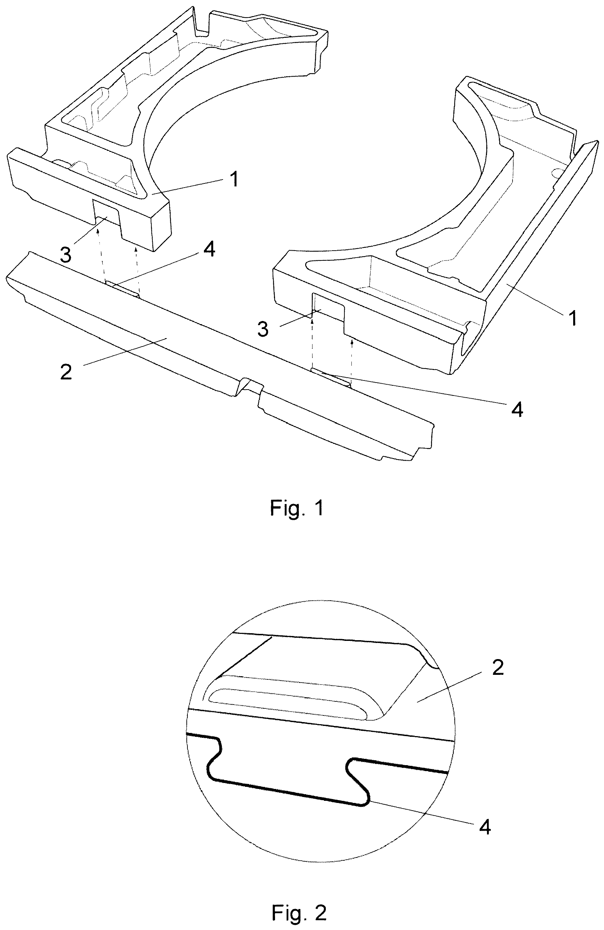

Die Fig. 1 zeigt in einer perspektivischen Ansicht die Verbindung des ersten und des zweiten Muldeneinsatzes im Fahrzeuggepäckraum, die Fig. 2 in einer perspektivischen Ansicht das Detail des prismatischen Vorsprungs am zweiten Muldeneinsatz.

### Ausführungsbeispiele der Erfindung

Die Verbindung der Muldeneinsätze im Fahrzeuggepäckraum nach Fig. 1 bis 2 wird zwischen dem ersten Muldeneinsatz 1 und dem zweiten Muldeneinsatz 2 gebildet. Als erster Muldeneinsatz 1 sind hier zwei abstützende Staufächer nach Fig. 1, die aus dem expandierten Polypropylen (EPP) hergestellt und gegeneinander angeordnet sind und den Stauraum für das Reserverad im Gepäckraumboden eingrenzen. Zugleich sind in diesen Staufächern Einteilungselemente ausgebildet, um weitere Bordausstattungen des Fahrzeuges, wie z.B. Wagenheber, Warndreieck, Ersatzlampenkasten usw. zu verstauen können. Diese zwei Staufächer 1 sollen mit dem zweiten Muldeneinsatz 2 verbunden werden. Als zweiter Muldeneinsatz 2 ist hier der Boden-Querbalken, der bis zur Trennwand der Rücksitze hinreicht und auch aus EPP hergestellt ist.

Für die Verbindung der Muldeneinsätze 1 und 2 des Fahrzeuggepäckraumes ist im ersten Muldeneinsatz 1 eine Verbindungsnut 3 in prismatischer Form ausgebildet. Der zweite Muldeneinsatz 2umfasst einen prismatischen Vorsprung, der mit seiner Form dem Profil der Verbindungsnut entspricht.

Der prismatische Vorsprung 4 ist an dem zweiten Muldeneinsatz 2 einteilig ausgebildet, d.h. dass der zweite Muldeneinsatz 2 mitsamt dem prismatischen Vorsprung 4 hergestellt wird. In der Verbindungsnut 3 des ersten Muldeneinsatzes 1 ist der prismatische Vorsprung 4 des zweiten Muldeneinsatzes 2 angeordnet und stellt so die Verbindung der Muldeneinsätze 1 und 2 her. Der prismatische Vorsprung 4 entspricht mit seiner Form dem Profil der Verbindungsnut 3. So passt der prismatische Vorsprung 4 genau in die Verbindungsnut 3 des ersten Muldeneinsatzes 1, in der er durch die Form der Verbindungsnut 3 gehalten wird.

Auf dem Boden-Querbalken 2 sind zwei prismatische Vorsprünge 4 ausgebildet und zwar so, dass jeder prismatischer Vorsprung 4 gegenüber einer Verbindungsnut 3 des jeweiligen ersten Muldeneinsatzes 1 liegt, damit die richtige geforderte Verbindung der Muldeneinsätze 1 und 2 gebildet wird.

Dieses einfache Prinzip kann ohne die Notwendigkeit von Spezialwerkzeugen und - vorrichtungen verwendet werden. Gleichzeitig entfällt das Risiko der Beschädigung der Bauteile durch das Herausreisen der verschmelzten Kunststoffeinlage aus dem EPP-Muldeneinsatz.

Die eigentliche Verbindung der Muldeneinsätze ist so ausgeführt, dass in die Verbindungsnut 3 des ersten Muldeneinsatzes 1 der prismatische Vorsprung 4 des zweiten Muldeneinsatzes 2 eingesteckt wird. So wird die notwendige Verbindung des zweiten Muldeneinsatzes 2 mit dem ersten Muldeneinsatz 1 gebildet.

### Gewerbliche Anwendbarkeit

Die erfindungsgemäße Verbindung von Bodenteilen des Fahrzeugkofferraumes kann in allen Automobilen eingesetzt werden, insbesondere dann bei Personenkraftfahrzeugen, wo verschiedene Fahrzeugbodenteile zu verbinden ist.

## Patentansprüche

1. Eine Verbindung von Muldeneinsätzen im Fahrzeuggepäckraum ausgebildet zwischen einem ersten Muldeneinsatz (1) und einem zweiten Muldeneinsatz (2) im Fahrzeuggepäckraum **dadurch gekennzeichnet, dass** der erste Muldeneinsatz (1) wenigstens eine Verbindungsnut (3) mit prismatischer Form aufweist und dass der zweite Muldeneinsatz (2) wenigstens einen prismatischen Vorsprung (4) aufweist, der mit seiner Form dem Profil der Verbindungsnut (3) entspricht, wobei der prismatische Vorsprung (4) für genaues Eingreifen in die Verbindungsnut (3) des ersten Muldeneinsatzes (1) ausgebildet ist, in der er durch die Form der Verbindungsnut (3) gehalten wird.

2. Eine Verbindung von Muldeneinsätzen nach Anspruch 1 **dadurch gekennzeichnet, dass** der prismatische Vorsprung (4) auf dem zweiten Muldeneinsatz (2) einteilig ausgebildet ist.

3. Eine Verbindung von Muldeneinsätzen noch vorgenannten Ansprüchen **dadurch gekennzeichnet, dass** der erste Muldeneinsatz (1) aus dem expandiertem Polypropylen hergestellt ist.

4. Eine Verbindung von Muldeneinsätzen noch vorgenannten Ansprüchen **dadurch gekennzeichnet, dass** der zweite Muldeneinsatz (2) aus dem expandiertem Polypropylen hergestellt ist.
